# FASCICULE DE BREVET EUROPEEN

(11) **EP 1 748 651 B1**
(45) Date de publication et mention de la délivrance du brevet: **25.12.2013**
(21) Numéro de dépôt: 06291211.8
(22) Date de dépôt: 26.07.2006
(51) Int. Cl.: H04N 5/64

(54) **Dispositif de télévision numérique terrestre portable comprenant un dispositif de réception d'un signal numérique de faible puissance**
Tragbares Fernsehgerät zum Empfang digitaler terrestrischer Signale niedriger Leistung
Portable terrestrial digital television device comprising a low power digital signal reception device

(30) Priorité: 27.07.2005 FR 0508035; 17.02.2006 FR 0601427
(43) Date de publication de la demande: 31.01.2007
(73) Titulaire: Archos, 91430 Igny (FR)
(72) Inventeur: Crohas, Henri, 91370 Verrieres-le-Buisson (FR); Gregoire, Yves, 92290 Chatenay-Malabry (FR)
(74) Mandataire: Pontet Allano & Associes

(56) Documents cités:
- WO-A-2004/093443
- WO-A2-03/065500
- US-A- 4 443 819
- FUNKE ANTENNEN BV: "Product file 293.185002 ADSC410-45T (ACT)"[Online] 10 janvier 2005 (2005-01-10), XP002387705 Extrait de l'Internet: URL:http://web.archive.org/web/20050313184 634/www.funke.nl/prod_files/digitenne/293_ 185002_adsc410_100105_790519859.pdf> [extrait le 2006-06-27]
- PATENT ABSTRACTS OF JAPAN vol. 2003, no. 08, 6 août 2003 (2003-08-06) -& JP 2003 124855 A (HITACHI KOKUSAI ELECTRIC INC), 25 avril 2003 (2003-04-25)

## Description

La présente invention se rapporte à un dispositif de télévision numérique terrestre portable comprenant un dispositif de réception d'un signal numérique de faible puissance et à un jeu d'antennes.

Les appareils de réception de la télévision numérique terrestre (TNT) sont mis en oeuvre conformément au standard DVB-T (« Digital Video Broadcasting ― Terrestial » en terminologie anglo-saxonne).

La puissance d'émission du signal TNT a été fixée à un niveau faible de telle sorte que les émissions de télévision analogique ne sont pas perturbées.

Ce niveau de puissance est suffisant pour une réception de la télévision numérique terrestre selon la norme DVB-T réalisée au moyen d'antenne râteau positionnée sur le toit, soit à une hauteur d'environ dix mètres au dessus du sol.

Une adaptation de la norme DVB-T a été réalisée pour la réception de la télévision numérique terrestre sur des récepteurs mobiles et portables. Ainsi, le DVB-H (« Digital Video Broascasting for Handheld » en terminologie anglo-saxonne) est une variante de la télévision numérique terrestre DVB-T qui prend en compte les contraintes des récepteurs portables.

Si la réalisation d'un récepteur portable exploitant un signal DVB-H est aisée, le dispositif de réception d'un signal DVB-T est beaucoup plus délicat à mettre au point.

La réception de la télévision numérique devra de la sorte être réalisée au moyen d'une antenne située non plus à une dizaine de mètre au dessus du sol mais à une hauteur largement moins importante (environ à 1,5 mètres au dessus du sol).

Cependant, la puissance d'émission du signal TNT est insuffisante pour une réception au moyen d'une telle antenne, en particulier pour une utilisation à l'intérieur des constructions ou encore dans le cas de la réception en mobilité.

Il est connu des antennes à deux brins utilisés pour recevoir le signal numérique de la télévision numérique au sein d'un véhicule tel que décrit par Funke et présenté à l'adresse www.funke.nl. Les antennes, notamment les antennes ADSC 410-45T, sont adaptées à recevoir dans un environnement mobile, la télévision numérique terrestre selon la norme DVB-T.

Cette antenne est composée de deux brins, dont un brin est de plus grande hauteur que le second. Cette antenne est directive et est ainsi optimisée pour la réception de signaux numériques provenant d'une certaine direction. Ces antennes sont fixées au véhicule et sont reliées au dispositif terminal au moyen d'un câble co-axial.

Si cette antenne est bien adaptée à la réception de la télévision numérique terrestre selon la norme DVB-T, elle n'est pas appropriée pour les appareils de télévision numérique terrestre portables et conformes à cette même norme DVB-T.

Le document WO2004/093443 décrit un récepteur TV sans fil comprenant un écran et deux antennes. Le récepteur reçoit une information vidéo transmise par un transmetteur spécifique local. Le document se place donc typiquement dans une problématique de réception d'un signal de télévision au sein d'un système local sans fil. C'est le transmetteur qui reçoit de manière classique un signal diffusé par un réseau de télédiffusion, pas les antennes. Les antennes ne sont pas des moyens de réception d'un signal de télévision numérique terrestre. Le récepteur doit donc rester au sein de son système local sans fil, et ne peut être utilisé dans un environnement mobile tel que par exemple une voiture.

Ainsi, les problèmes suivants interviennent lors de la mise en oeuvre d'un appareil de télévision numérique terrestre portable de réception intégrant des antennes de réception comme par exemple :
- des contraintes mécaniques : en effet, l'appareil de télévision numérique terrestre étant portable, les moyens de réception doivent être adaptés afin d'être également portables et mobiles avec l'appareil de télévision numérique terrestre;
- des contraintes électromagnétiques : l'appareil de télévision numérique terrestre en cours de fonctionnement émet un rayonnement électromagnétique qui ne doit pas perturber la réception du signal numérique par les antennes ;
- des contraintes ergonomiques, et
- des contraintes liées aux caractéristiques propres à l'émission de signaux DVB-T et DVB-H en termes de modulations, de fréquences et de puissance du signal numérique.

L'invention a pour but de remédier aux problèmes précités.

A cet effet, la présente invention propose un dispositif de télévision numérique terrestre portable comme décrit dans les revendications annexées.

La description se réfère aux dessins qui l'accompagnent, dans lesquels :
- la figure 1 a illustre en vue de dessus un appareil de télévision numérique terrestre portable selon un premier mode de réalisation ;
- la figure 1b illustre schématiquement l'appareil de télévision numérique terrestre portable ;
- la figure 1c illustre en vue de côté l'appareil de télévision numérique terrestre portable selon le premier mode de réalisation ;
- la figure 2 illustre la position sur l'appareil de télévision numérique terrestre portable des antennes à deux brins de tailles différentes ;
- la figure 3a illustre en vue de dessus l'orientation des antennes selon le premier mode de réalisation ;
- la figure 3b illustre en vue de côté l'orientation des antennes selon le premier mode de réalisation ;
- la figure 3c illustre une variante de positionnement des antennes en vue de face ;
- la figure 4 illustre une seconde variante de positionnement des antennes en vue de face ;
- la figure 5a illustre en vue de dessus un appareil de télévision numérique terrestre portable comprenant un clapet intégrant les antennes selon un second mode de réalisation ;
- la figure 5b illustre en vue de côté un appareil de télévision numérique terrestre portable comprenant un clapet fermé intégrant les antennes selon le second mode de réalisation ;
- la figure 5c illustre en vue de côté un appareil de télévision numérique terrestre portable comprenant le clapet ouvert intégrant les antennes selon le second mode de réalisation ;
- la figure 6 illustre en vue de côté un appareil de télévision numérique terrestre portable incorporé dans une sacoche selon un troisième mode de réalisation ;
- la figure 7 illustre un appareil de télévision numérique terrestre portable dont les antennes sont déportées ;
- la figure 8 illustre une variante du dispositif de la figure 7 dans lequel les antennes déportées sont portées par un même support ;
- la figure 9 montre le support d'antennes en position partiellement ouverte ;
- la figure 10 montre le support d'antennes en position totalement ouverte ;
- la figure 11 illustre des moyens de rangement dans une sacoche d'antennes ; et
- la figure 12 représente un appareil de télévision numérique terrestre portable relié aux antennes positionnées dans la sacoche d'antennes.

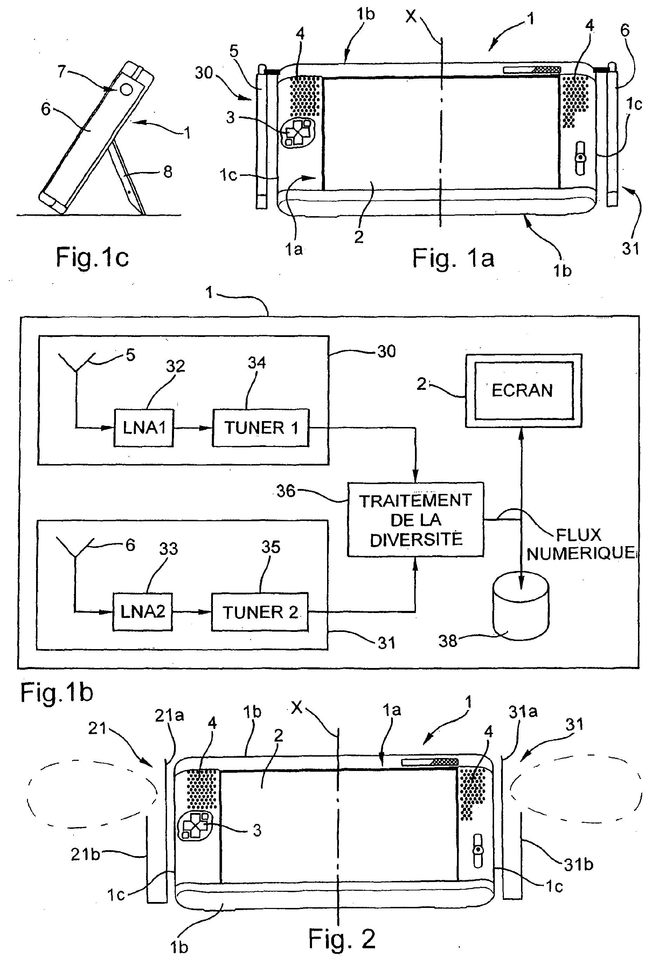

Les figures 1 a à 4 illustrent des exemples de formes schématiques particulières de dispositif de télévision numérique terrestre portable dans lesquelles s'insèrent les caractéristiques de l'invention.

En référence à la figure 1a, une forme de réalisation particulière d'un appareil de télévision numérique terrestre portable 1 est illustrée.

L'appareil 1 comprend sur une face avant 1a, un écran de visualisation 2 de données multimédia, notamment de la télévision numérique terrestre, des moyens de commande 3, par exemple des boutons, et des sorties audio 4. L'appareil de télévision numérique terrestre portable 1 compte un corps sensiblement rectangulaire et il comporte deux bords longitudinaux 1b et deux bords latéraux 1c.

A cet appareil sont connectés des moyens de réception de données de télévision, notamment de la télévision numérique terrestre, par l'intermédiaire d'antennes adaptées, de manière à ce que l'appareil puisse être utilisé aussi bien dans un environnement immobile, en particulier à l'intérieur d'une maison, que dans un environnement mobile, par exemple à l'intérieur d'une voiture.

L'appareil de télévision numérique terrestre portable porte deux antennes 5, 6, ayant une sensibilité non isotrope ou anisotrope dans l'espace, c'est-à-dire que la sensibilité de réception d'une antenne est dépendante de son orientation dans l'espace. Ces antennes sont notamment des antennes UHF ou VHF.

En fait, une antenne est dite spatialement anisotrope si elle est optimisée pour une réception selon une direction privilégiée. On parle également d'« antenne directive ».

Ces antennes sont de dimensions réduites et fonctionnent notamment en diversité bien qu'elles soient situées à proximité du terminal et à faible distance l'une de l'autre.

Un mécanisme implémentant la diversité est décrit dans le document « A revolution for indoor DVB-T portable reception and outdoor DVB-T mobile reception » présent à l'adresse Internet http://www.dibcom.net/us/document/DiBcom Diversity White Paper web.pdf.

En effet, la propagation des ondes électromagnétiques entre un émetteur et un récepteur suit des trajets multiples du fait de la présence d'obstacles divers (construction, végétation, etc) sur lesquels le signal se réfléchit et se réfracte.

De plus, si le récepteur se déplace, il se produit un effet connu sous le nom d'« effet Doppler ».

Un mécanisme implémentant la diversité effectue les traitements appropriés de telle sorte que, à partir des deux signaux reçus sur les deux antennes, ce mécanisme produit un signal de meilleure qualité en termes de niveau de signal et de rapport signal/bruit.

Cette mise en oeuvre permet de corriger les erreurs de transmission et filtrer les bruits, traiter les échos dus aux trajets multiples empruntés par le signal reçu et compenser l'effet Doppler dans le cas d'une réception dans un véhicule en mouvement.

Tel qu'illustré en figure 1b, l'appareil de télévision numérique terrestre portable comprend deux moyens de réception 30 et 31, composés chacun d'une antenne 5, 6, d'un amplificateur LNA (« Low Noise Amplifier » en terminologie anglo-saxonne) 32 et 33 et d'un tuner (aussi connu sous le nom de syntoniseur) 34 et 35.

Une mise en oeuvre du mécanisme 36 implémentant la diversité s'appuie sur les signaux générés par les moyens de réception 30 et 31.

Ce mécanisme 36 effectue les traitements de la diversité en analysant numériquement et instantanément les deux signaux en sortie des deux tuners 34 et 35.

Pour ce faire, des opérations de comparaison et de combinaison des deux signaux sont effectuées pour s'affranchir des parasites ambiants, des bruits induits par la propagation du signal depuis son point d'émission, des échos longs et courts dus aux réflexions sur les obstacles rencontrés, ainsi que de l'effet Doppler inhérent à une réception en mobilité.

Ces traitements permettent de générer un signal présentant un rapport signal à bruit C/N meilleur que chacun des deux signaux pris indépendamment.

De la sorte, on obtient une amélioration de la qualité de la réception et de la zone de couverture effective.

Le signal numérique en sortie du mécanisme 36 implémentant la diversité peut, par exemple, être visualisé sur l'écran de visualisation 2 de l'appareil de télévision numérique terrestre portable, ou être mémorisé dans un moyen de stockage 38 par des moyens d'enregistrement.

Comme illustré à la figure 1a, les antennes sont, par exemple, disposées symétriquement par rapport à un axe de symétrie X de l'appareil de télévision numérique terrestre portable. Cependant, d'autres dispositions des antennes par rapport à l'appareil peuvent être envisagées.

Selon un premier mode de réalisation, les antennes 5 et 6 sont à proximité respectivement de deux côtés opposés de l'appareil de télévision numérique terrestre portable, et notamment disposées de manière adjacente aux bords 1c latéraux de l'appareil de télévision numérique terrestre portable. Cette disposition permet d'éloigner au maximum les antennes vis-à-vis des éléments de rayonnement électro-magnétique de l'appareil.

Cette disposition sur l'appareil de télévision numérique terrestre portable permet d'éloigner au maximum une antenne par rapport à l'autre, de manière à atteindre si possible une distance supérieure ou égale au quart d'onde du signal à recevoir, soit 12,5 cm à une fréquence de 600 MHz. De la sorte, si une antenne reçoit un signal d'amplitude minimale, c'est-à-dire dans un creux du signal aussi appelé « noeud du signal », alors la seconde antenne reçoit un signal d'amplitude maximale, c'est-à-dire dans un ventre du signal.

Il est à noter que les bandes IV et V utilisées pour la diffusion de la télévision terrestre en France varient de 470 à 860 MHz (canaux 21 à 69).

De même, la disposition des antennes par rapport à l'appareil de télévision numérique terrestre portable et en particulier vis-à-vis du corps métallique de l'appareil est telle que ces antennes sont éloignées autant que possible du corps métallique.

Dans ce mode de réalisation, les antennes 5 et 6 sont fixées à l'appareil de télévision numérique terrestre portable par des moyens de raccordement 7 décrits ultérieurement.

La figure 1 c illustre l'appareil de télévision numérique terrestre portable, vu de côté et disposé dans une position inclinée permettant à un utilisateur de visualiser confortablement des données multimédia, tout en ayant l'appareil posé sur un plan horizontal de support, tel qu'un bureau. Le maintien en position inclinée pour l'utilisateur est assuré au moyen d'une béquille 8.

Dans ce mode de réalisation, les antennes 5 et 6 sont fortement directives et sont formées chacune de deux brins de hauteurs inégales, tel que montré en figure 2. D'autres formes géométriques d'antennes peuvent également être envisagées.

Les antennes 21 et 31, représentées schématiquement en figure 2, correspondent respectivement aux antennes 5 et 6 de la figure 1a.

Selon un mode de réalisation, les brins de grande longueur 21 a et 31a sont positionnés près de l'appareil alors que les brins de petites longueurs 21b et 31b sont éloignés de l'appareil. Une telle orientation des antennes permet que les zones de sensibilité maximale soient à recouvrement minimal voire nul, réduisant de la sorte au maximum le couplage.

En effet, une antenne, bien que considérée comme un récepteur, réémet partiellement des signaux et peut perturber une autre antenne à proximité : on parle alors de couplage entre les antennes.

Ainsi, la mise en oeuvre du découplage ci-dessus, permet donc d'une part, de minimiser, voire éviter le couplage et, d'autre part, de ne pas recevoir un même signal en provenance d'une même direction.

Pour ce faire, on adopte une disposition des antennes de façon à ce que les zones de sensibilité maximale des antennes soient disjointes.

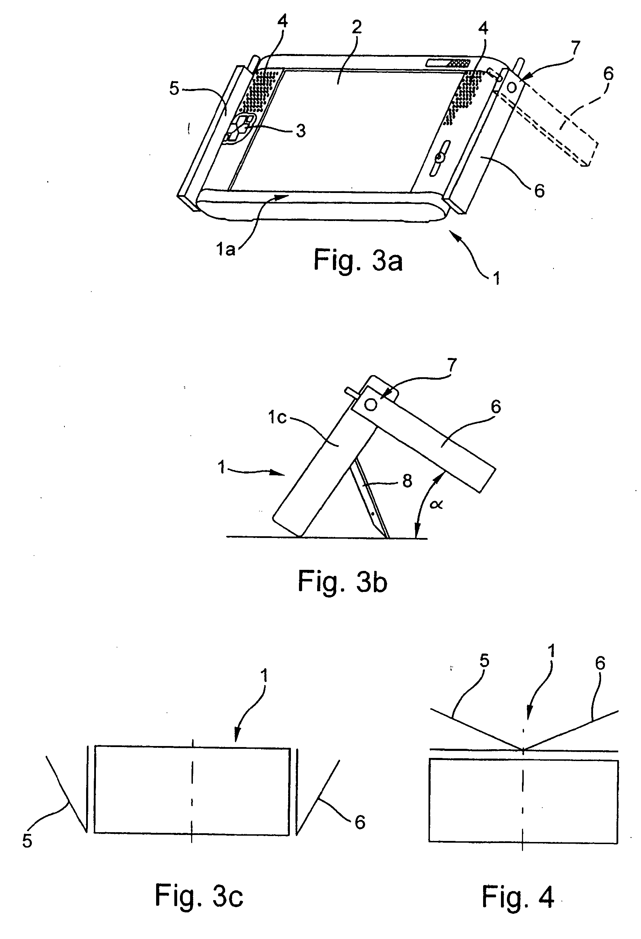

Tel qu'illustré en figure 3a, les antennes 5 et 6 sont fixées sur l'appareil de télévision numérique terrestre portable 1, à une extrémité des bords latéraux 1c de l'appareil, c'est-à-dire au niveau des deux coins de l'appareil, par des moyens de raccordement 7.

Dans ce mode de réalisation, les antennes 5 et 6 sont raccordées à deux coins opposés de l'appareil dans l'alignement d'un bord longitudinal de l'appareil.

Elles peuvent être déployées, par exemple par rotation autour de la fixation de l'appareil de télévision numérique terrestre portable.

Un tel raccordement articulé des antennes à l'appareil de télévision numérique terrestre portable permet de déployer ces antennes autour d'un axe de déploiement correspondant ici à un bord longitudinal 1b de l'appareil.

De plus, le déploiement des antennes par rapport au plan de l'appareil permet de réduire davantage les perturbations créées par l'appareil, et/ou d'améliorer la réception du signal selon sa polarité.

La figure 3b illustre l'appareil de télévision numérique terrestre portable selon une position permettant à un utilisateur de visualiser l'écran du dispositif et ayant les antennes déployées.

Tel qu'illustré à la figure 3b, l'angle α avec le plan horizontal des antennes 5 et 6 peut varier de 0° à 360°. Cependant, il est observé qu'une valeur d'angle α de 40° à 50°, voir de 30° à 70°, entre l'antenne déployée et le plan horizontal est optimale pour une réception simultanée des deux polarisations horizontale et verticale du signal.

Selon une autre variante du déploiement des antennes sur l'appareil de télévision numérique terrestre portable, les antennes 5 et 6 se déploient dans le plan de l'appareil tel qu'illustré en figure 3c.

Selon une variante de positionnement des antennes sur l'appareil de télévision numérique terrestre portable, les antennes 5 et 6 sont positionnées sur l'un des bords longitudinaux 1b tel qu'illustré en figure 4.

Ces antennes 5 et 6 peuvent pivoter dans le plan de l'appareil de télévision numérique terrestre portable ou perpendiculairement à ce plan.

Ce déploiement des antennes permet de les placer hors de la zone de rayonnement magnétique de l'appareil de télévision numérique terrestre portable, c'est-à-dire de manière éloignée au plan de masse de l'appareil de télévision numérique terrestre portable, et d'éviter que l'appareil occulte le champ de réception des antennes.

La présence de ces antennes à proximité de l'appareil de télévision numérique terrestre portable nécessite également des adaptations de l'appareil de télévision numérique terrestre portable, notamment pour le traitement du signal dans les circuits intégrés de l'appareil par les moyens de réception pour exploiter la diversité afin de filtrer les bruits, traiter les échos, corriger les erreurs et compenser l'effet Doppler.

La mise en oeuvre réalisée permet d'obtenir une meilleure sensibilité pour un niveau donné de signal reçu, avec un traitement efficace de l'effet Doppler permettant, en particulier, une utilisation dans un véhicule en mouvement.

Cette mise en oeuvre permet également une plus grande capacité à traiter les différents bruits induits par les interférences électromagnétiques dues aux rayonnements émis par le terminal qui viennent s'ajouter aux perturbations du signal subies lors de sa propagation, en particulier les échos produits par les trajets multiples du signal.

En effet, les fréquences de réception en DVB-T sont voisines des harmoniques des fréquences de rayonnement des composants actifs du terminal, ce qui peut créer des interférences électromagnétiques.

En variante, les antennes 5 et 6 représentées aux figures 1a à 4 sont des antennes isotropes, par exemple des antennes quart d'onde.

Il est ici à noter que des antennes isotropes, notamment, les antennes isotropes quart d'onde ont un comportement anisotrope lorsqu'elles sont proches l'une de l'autre. Telle est le cas lors de l'utilisation d'antennes sur un appareil de télévision numérique terrestre portable.

On comprend en conséquence que ce qui précède s'applique donc également à des antennes isotropes, telles que des antennes quart d'onde.

Tel que vu précédemment, selon une première variante de réalisation pour le raccordement des antennes à l'appareil de télévision numérique terrestre portable, les antennes 5 et 6 sont fixées à l'appareil au moyen d'un raccordement articulé 7. Dans ce mode de réalisation, les antennes sont directement fixées sur les bords du terminal au niveau des coins supérieurs.

Cette fixation articulée permet le déploiement des antennes par rotation autour du point de fixation tel qu'illustré en figure 3.

Les angles des deux antennes en position déployée par rapport au plan horizontal de support de l'appareil de télévision numérique terrestre portable peuvent être différents. La variation des angles de déploiement des antennes permet de rechercher la position donnant la meilleure qualité de réception.

La fixation des antennes à l'appareil de télévision numérique terrestre portable peut également être amovible pour que les antennes se détachent, de sorte que ces antennes peuvent être placées à distance l'une de l'autre et loin de l'appareil de télévision numérique terrestre portable. De la sorte, l'efficacité de la diversité sera plus grande.

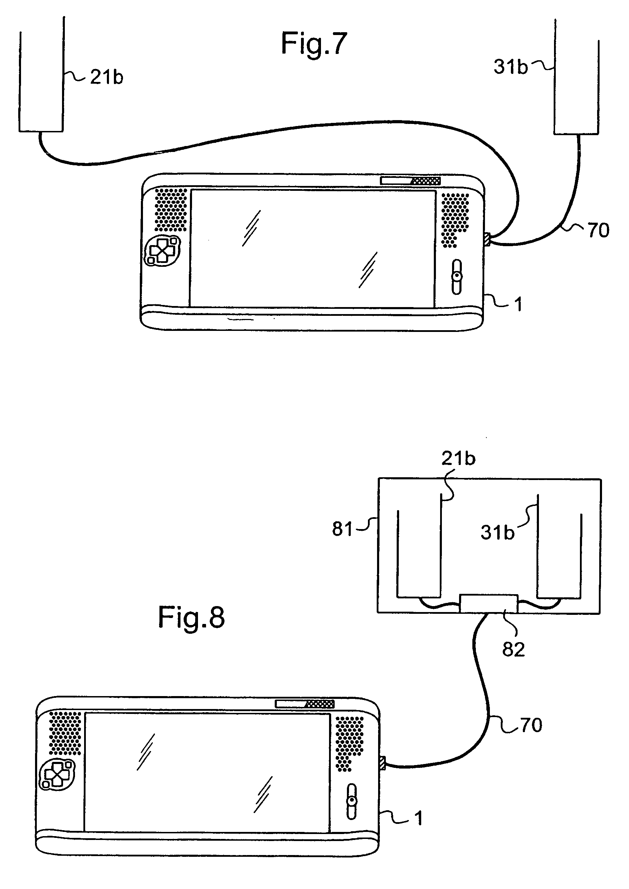

Différents modes de réalisation d'une telle configuration sont décrits en référence aux figures 7 à 12 ci-après.

En outre, dans le cas d'une utilisation dans un endroit équipé d'une antenne de réception sur le toit, les antennes incorporées peuvent être ôtées et l'appareil est alors raccordé au câble de l'antenne râteau, offrant ainsi, en principe, un meilleur rapport signal à bruit et donc une meilleure qualité de réception.

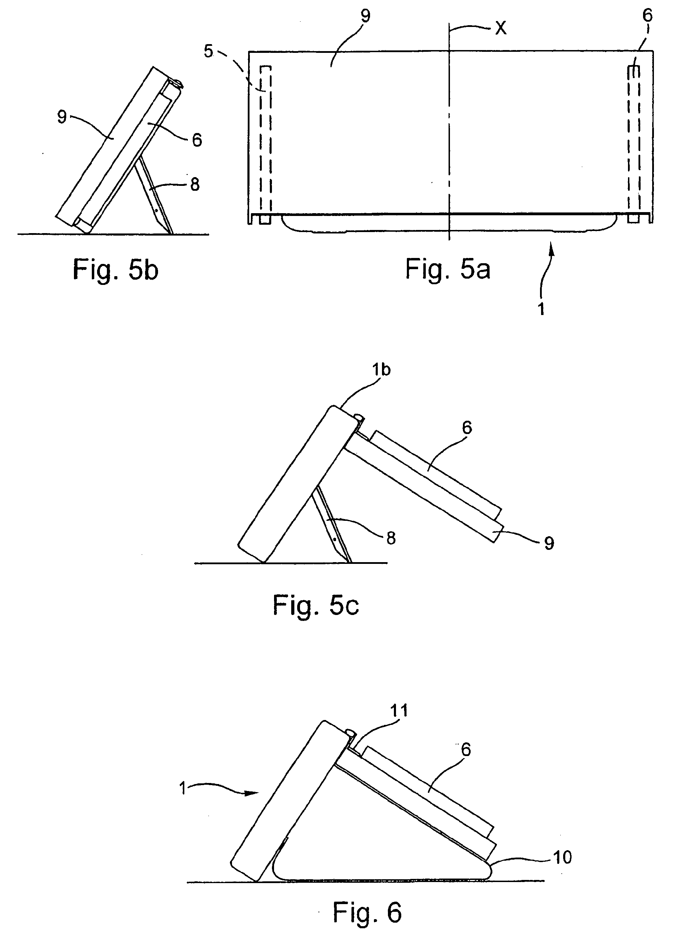

Selon une variante de réalisation pour le raccordement des antennes à l'appareil de télévision numérique terrestre portable, illustrée en figures 5a, 5b et 5c, les antennes 5 et 6 sont incorporées dans un support notamment dans un clapet amovible 9 de protection de l'écran.

Le clapet amovible est fixé à l'appareil de télévision numérique terrestre portable par des charnières d'articulation, par exemple sur un bord longitudinal 1b de l'appareil de télévision numérique terrestre portable.

La figure 5a illustre l'appareil de télévision numérique terrestre portable 1 muni d'un clapet 9 protégeant l'écran de visualisation en position fermée. Pour cela, le clapet est placé au dessus de l'écran de visualisation. Le clapet 9 comprend les antennes 5 et 6 positionnées de manière adjacente aux bords latéraux du dispositif.

Les antennes 5, 6 sont également disposées symétriquement par rapport à un axe de symétrie X de l'appareil de télévision numérique terrestre portable 1.

La figure 5b illustre cet appareil 1 en vue de côté où le clapet 9 obstrue l'écran de manière à protéger ce dernier.

Selon cette variante, le déploiement des antennes se fait par ouverture du clapet comme schématisé sur la figure 5c. Le clapet, une fois ouvert, forme un angle de 260 à 280° par rapport à la face avant de l'appareil de télévision numérique terrestre portable. Ce clapet peut par ailleurs servir de béquille, permettant une utilisation telle que l'appareil de télévision numérique terrestre portable est posé sur un plan horizontal de manière à rendre la visualisation de l'écran adaptée à l'utilisateur. De même, dans cette position ouverte du clapet, les antennes 5 et 6 forment alors un angle optimal pour la réception du signal, compris entre 40 et 50°, par rapport au plan horizontal.

Enfin, le clapet amovible 9 peut être retiré dans les cas suivants.

Selon un premier cas, l'appareil est utilisé en situation fixe où il peut être avantageux de détacher le clapet et le placer loin du terminal pour améliorer la qualité de réception.

Selon un second cas, il peut être avantageux de détacher le clapet et d'enlever les antennes de celui-ci pour les placer loin l'une de l'autre et loin de l'appareil de télévision numérique terrestre portable.

Enfin, lorsque l'utilisateur se trouve dans un endroit équipé d'une antenne de réception installée sur le toit et offrant un meilleur rapport signal à bruit, on retire le clapet et on raccorde l'appareil de télévision numérique terrestre portable au câble de l'antenne râteau à l'aide d'un câble d'adaptation qui relie la prise coaxiale à une entrée antenne de l'appareil de télévision numérique terrestre portable.

Selon une autre variante de réalisation, pour le raccordement des antennes à l'appareil de télévision numérique terrestre portable, les antennes 5 et 6 sont incorporées dans le rabat d'une sacoche de transport 10 de l'appareil de télévision numérique terrestre portable 1, tel qu'illustré en figure 6.

La sacoche est fixée à l'appareil de télévision numérique terrestre portable au moyen d'une attache 11.

Selon cette variante, le déploiement des antennes se fait par ouverture du rabat de la sacoche tel qu'illustré à la figure 6.

De plus, ce rabat peut être prévu pour que, une fois retourné et attaché au dos du terminal, il serve de béquille permettant une utilisation telle que l'appareil de télévision numérique terrestre portable 1 soit posé sur un plan, avec la face avant équipée de l'écran dans une position inclinée.

L'appareil de télévision numérique terrestre portable peut être sorti de la sacoche dans les cas suivants.

Dans un premier cas, l'appareil est utilisé en situation fixe et il peut être avantageux de détacher la sacoche et les antennes qui y sont incorporées et de les placer loin du terminal pour améliorer la qualité de réception.

Selon un second cas, il peut être avantageux de détacher la sacoche et de sortir les antennes pour les placer loin l'une de l'autre et loin de l'appareil de télévision numérique terrestre portable.

Enfin, lorsque l'utilisateur se trouve dans un endroit équipé d'une antenne de réception installée sur le toit et offrant un meilleur rapport signal à bruit, il est possible de retirer la sacoche avec les antennes incorporées et de raccorder l'appareil de télévision numérique terrestre portable à la descente de l'antenne râteau à l'aide d'un câble d'adaptation qui relie la prise coaxiale à l'entrée antenne de l'appareil de télévision numérique terrestre portable.

Il est maintenant décrit, en référence aux figures 7 à 12, des modes de réalisation dans lesquels les antennes sont déportées vis-à-vis de l'appareil de télévision numérique.

Lorsque ces antennes sont à l'écart de l'appareil de télévision numérique terrestre portable, celles-ci, portées par un support non représenté, sont reliées à l'appareil par une liaison filaire 70 tel qu'illustré en figure 7.

En éloignant les antennes de l'appareil de télévision numérique terrestre portable, tel qu'illustré, les conditions de bon fonctionnement et de réception sont améliorées, et ceci que ce soit des antennes ayant une caractéristique individuelle anisotrope ou isotrope.

En effet, cette disposition favorise le bon fonctionnement de la réception par l'éloignement des antennes de la source de bruit produit par l'appareil de télévision numérique terrestre portable.

A fortiori si l'on éloigne les antennes l'une de l'autre, notamment en les sortant de leur support, l'apport des traitements de la diversité est maximisé par l'augmentation de la probabilité de capter des signaux différents à partir de chacune des antennes.

Selon une variante préférée de réalisation, les antennes sont portées par un même support 81 apte à être séparé de l'appareil de télévision numérique terrestre portable. Ainsi, en fonction des besoins, il est possible d'éloigner ces antennes de l'appareil de télévision numérique terrestre comme montré en figure 8.

Le support 81 peut également comprendre des moyens permettant d'incliner les antennes par rapport à un plan horizontal de manière à obtenir une meilleure réception du signal.

En outre, le support d'antennes peut comprendre des moyens d'amplification 82 des deux signaux captés par les antennes pour en assurer le transport jusqu'au récepteur contenu dans l'appareil de télévision numérique terrestre 1.

Ce déport du support contenant les antennes peut être réalisé de quelques dizaines de centimètres à plusieurs mètres.

Le support d'antennes se compose, par exemple, de deux parties reliées entre elles par un moyen d'articulation. Chacune des parties comprend des moyens pour maintenir respectivement chaque antenne.

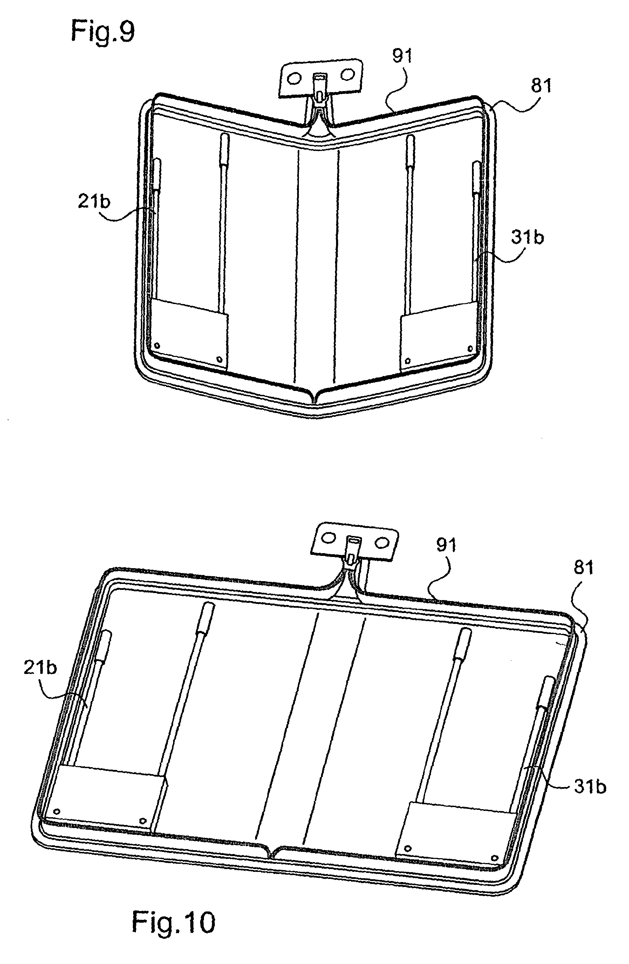

Le support d'antennes peut ainsi être mis en position partiellement (figure 9) ou totalement (figure 10) ouverte par rapport à l'axe d'articulation, de manière à ce que les antennes 21b et 31b se retrouvent éloignées l'une de l'autre et donc dans une configuration propice à une bonne réception.

Ce support d'antennes 81 peut être, dans l'exemple ici considéré, constitué d'une sacoche d'antennes, c'est-à-dire prendre, notamment, la forme d'un livre ou d'une trousse à outils. Pour cela, elle est formée de deux parties rigides ou semi-rigides reliées entre elles et montées pivotantes l'une par rapport à l'autre permettant l'ouverture et la fermeture de la sacoche, de manière à s'ouvrir sur trois côtés. En outre, celle-ci comprend sur ses bords des moyens de fermeture 91, par exemple, une fermeture éclair, afin de maintenir la sacoche fermée lors du transport des antennes.

La sacoche d'antennes peut comprendre des poches dans lesquelles les antennes sont insérées.

La sacoche peut également prendre la forme d'un étui avec un rabat, l'étui comportant la première antenne et le rabat la seconde antenne.

La sacoche d'antennes, dans une position ouverte selon l'axe d'articulation, peut être disposée à plat sur la table. De la sorte, les antennes se retrouvent, par voie de conséquence, également à plat. Cette configuration est particulièrement avantageuse lorsque les émetteurs TNT sont à polarisation horizontale.

De même, la sacoche d'antennes, dans une position ouverte avec un angle inférieur à 180° selon l'axe d'articulation, peut être disposée verticalement sur la table. De la sorte, les antennes se retrouvent, par voie de conséquence, également dans un plan vertical. Cette configuration est particulièrement avantageuse lorsque les émetteurs TNT sont à polarisation verticale.

Des moyens non représentés peuvent être prévus pour maintenir la sacoche verticale, lorsqu'elle est ouverte sur 180°.

En outre, la sacoche d'antennes, dans la position ouverte, peut être maintenue au moyen d'une béquille (non représentée) de sorte que les antennes forment un angle avec le plan de la table.

Le support d'antennes peut également être, en variante non représentée, de la forme d'une boîte ayant un couvercle articulé, ce couvercle étant muni d'un étui pour une antenne et le fond de la boîte ayant un second étui pour la seconde antenne.

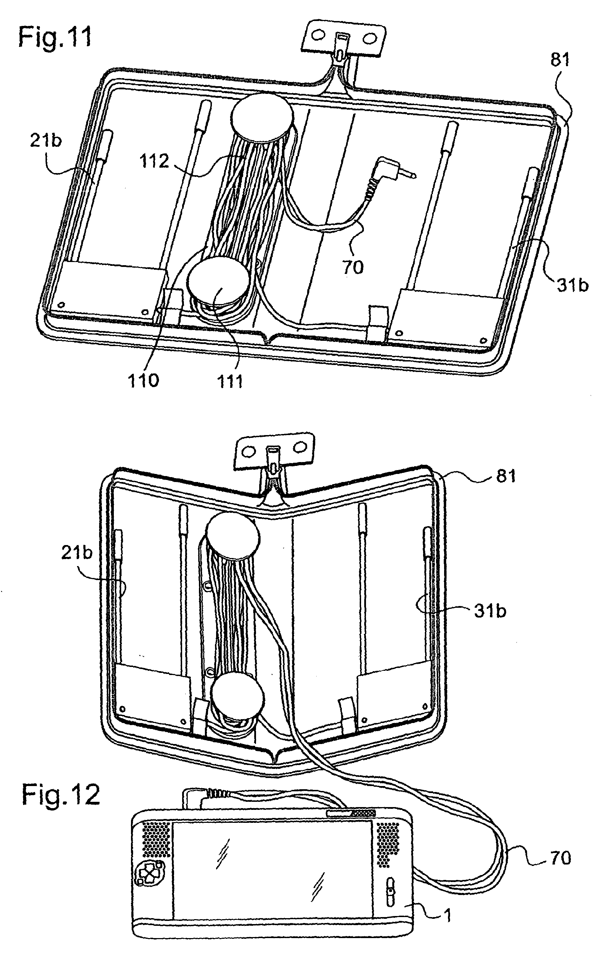

Selon un mode de réalisation particulier représenté aux figures 11 et 12, la sacoche d'antennes peut comprendre des moyens 110 aptes à ranger le câble de liaison 70 à l'appareil de télévision numérique terrestre portable pendant le transport tel qu'illustré en figure 11. Ce rangement est ici aménagé à l'intérieur de la sacoche au moyen d'un touret 111 pour enrouler le câble. L'embase 112 du touret peut être rendue solidaire à la sacoche notamment au moyen de rivets et être positionnée entre les antennes.

La figure 12 illustre un appareil de télévision numérique terrestre portable relié par une liaison filaire 70 aux antennes 21b et 31b contenues dans la sacoche d'antennes 81.

Selon un autre mode de réalisation non représenté, deux tuners 34 et 35 des figures 1a à 1c associés respectivement aux antennes peuvent être positionnés dans la sacoche d'antennes par des moyens de fixation détachables.

En particulier, les tuners 34 et 35 peuvent être insérés dans la sacoche d'antennes uniquement durant le transport de l'appareil de télévision numérique terrestre portable.

Selon un autre mode de réalisation particulier, les deux unités de traitement assurant le traitement numérique de corrélation et de la diversité des signaux reçus par chacune des antennes peuvent être positionnées dans la sacoche d'antennes par des moyens de fixation détachables.

En variante, les deux unités de traitement, assurant le traitement numérique de corrélation et de la diversité des signaux, peuvent être insérées dans la sacoche d'antennes uniquement durant le transport de l'appareil de télévision numérique terrestre portable.

Il est à noter que, dans encore une autre variante, les antennes peuvent être retirées de la sacoche d'antennes pour être fixées par des moyens individuels de fixation sur une paroi sensiblement verticale, telle qu'une cloison ou une fenêtre.

Ces moyens de fixation peuvent être notamment une ventouse, ou un adhésif. Selon un mode de réalisation, la ventouse est solidaire des antennes ; en variante, la ventouse est positionnée sur l'antenne préalablement à son utilisation. Cette disposition est particulièrement adaptée en voiture où les antennes peuvent être déployées en dehors de la sacoche d'antennes pour être fixées sur les vitres latérales de la voiture à l'aide des ventouses ou d'adhésif.

On comprend aisément que le jeu d'antennes dans son support consiste en un ensemble manipulable de manière autonome.

## Revendications

1. Dispositif de télévision numérique terrestre portable comprenant un appareil de télévision numérique terrestre portable et des moyens de réception d'un signal de télévision numérique terrestre de faible puissance, l'appareil de télévision numérique terrestre portable comprenant un écran de visualisation de la télévision numérique terrestre, le dispositif étant **caractérisé en ce que** les moyens de réception (30, 31) comprennent deux antennes pour réceptionner le signal numérique, la disposition relative desdites antennes étant telle que les deux antennes sont disposées à une distance, l'une de l'autre, supérieure ou égale au quart de la longueur d'onde du signal à réceptionner, les moyens de réception (30, 31) comprenant en outre deux tuners associés respectivement auxdites antennes, le dispositif de télévision numérique terrestre portable comprenant des moyens de traitement de la diversité des signaux numériques adaptés à traiter les signaux numériques en sortie desdits tuners, lesdites antennes étant portées par un support (9, 10, 81) comprenant des moyens de raccordement des antennes à l'appareil de télévision numérique terrestre portable, lesdites antennes portées par le support (9, 10, 81) étant aptes à être éloignées de l'appareil de télévision numérique terrestre portable.

2. Dispositif de télévision numérique terrestre portable selon la revendication 1, **caractérisé en ce que** les antennes sont reliées à l'appareil de télévision numérique terrestre portable par au moins une liaison filaire.

3. Dispositif de télévision numérique terrestre portable selon la revendication 2, **caractérisé en ce que** le support (9, 10, 81) comprend des moyens de rangement de la liaison filaire.

4. Dispositif de télévision numérique terrestre portable selon l'une quelconque des revendications 1 à 3, **caractérisé en ce que** le support (9, 10, 81) comprend des moyens (82) d'amplification des signaux captés par les antennes.

5. Dispositif de télévision numérique terrestre portable selon l'une quelconque des revendications 1 à 4, **caractérisé en ce que** les deux tuners sont détachables, et **en ce que** le support (9, 10, 81) comprend des moyens de fixation temporaire desdits tuners détachables.

6. Dispositif de télévision numérique terrestre portable selon la revendication 5, **caractérisé en ce que** le support comprend des moyens de fixation détachables des moyens de traitement de la diversité des signaux numériques adaptés à traiter les signaux numériques reçus.

7. Dispositif de télévision numérique terrestre portable selon l'une quelconque des revendications 1 à 6, **caractérisé en ce que** les antennes comprennent des moyens de fixation aptes à être fixés sur une paroi sensiblement verticale.

8. Dispositif de télévision numérique terrestre portable selon la revendication 7, **caractérisé en ce que** les moyens de fixation sont des ventouses ou de l'adhésif.

9. Dispositif de télévision numérique terrestre portable selon l'une quelconque des revendications précédentes, **caractérisé en ce que** le support (9, 10, 81) est un clapet de protection dudit écran de visualisation.

10. Dispositif de télévision numérique terrestre portable selon la revendication 9, **caractérisé en ce que** le clapet de protection est fixé à l'appareil de télévision numérique terrestre portable par des charnières d'articulation.

11. Dispositif de télévision numérique terrestre portable selon la revendication 10, **caractérisé en ce que** le clapet de protection, en position fermée, est au dessus de l'écran de visualisation dudit appareil de télévision numérique terrestre portable.

12. Dispositif de télévision numérique terrestre portable selon la revendication 10 ou 11, **caractérisé en ce que** le clapet de protection, en position déployée, est adapté à servir de béquille audit appareil de télévision numérique terrestre portable.

13. Dispositif de télévision numérique terrestre portable selon l'une quelconque des revendications 10 à 12, **caractérisé en ce que**, lorsque le clapet de protection est en position déployée, le clapet de protection forme un angle compris entre 260° et 280° avec ledit écran de visualisation de l'appareil de télévision numérique terrestre portable.

14. Dispositif de télévision numérique terrestre portable selon l'une quelconque des revendications 10 à 13, **caractérisé en ce que** le clapet de protection est adapté à être détaché dudit appareil de télévision numérique terrestre portable.

15. Dispositif de télévision numérique terrestre portable selon l'une quelconque des revendications 1 à 8, **caractérisé en ce qu'**une sacoche de transport est associé audit dispositif de télévision, numérique terrestre portable, un rabat de la sacoche de transport formant ledit support et incorporant les antennes, et le rabat étant mobile entre une position fermée et une position déployée par rapport à l'appareil de télévision numérique terrestre portable.

16. Dispositif de télévision numérique terrestre portable selon la revendication 15, **caractérisé en ce que**, lorsque le rabat est en position déployée, le rabat est adapté à servir de béquille audit appareil de télévision numérique terrestre portable.

17. Dispositif de télévision numérique terrestre portable selon l'une quelconque des revendications 1 à 8, **caractérisé en ce que** le support d'antennes est constitué d'une sacoche d'antennes.

18. Dispositif de télévision numérique terrestre portable selon la revendication 17, **caractérisé en ce que** le support d'antennes comporte deux parties articulées l'une par rapport à l'autre, chaque partie comportant une antenne, le support d'antennes étant apte à être positionné partiellement ou totalement ouvert par rapport à l'axe d'articulation pour éloigner les antennes l'une de l'autre.

19. Dispositif de télévision numérique terrestre portable selon la revendication 17 ou la revendication 18, **caractérisé en ce que** la sacoche d'antennes est ouvrable sur trois côtés.

20. Dispositif de télévision numérique terrestre portable selon l'une quelconques des revendications précédentes, **caractérisé en ce que** le dispositif de télévision numérique terrestre portable comprend des moyens de stockage et des moyens d'enregistrement adaptés à mémoriser le signal numérique dans les moyens de stockage.

21. Dispositif de télévision numérique terrestre portable selon l'une quelconque des revendications précédentes, **caractérisé en ce que** lesdites antennes sont à sensibilité spatialement anisotrope.

22. Dispositif de télévision numérique terrestre portable selon la revendication 21, **caractérisé en ce que** chaque antenne comprend deux brins de hauteurs inégales.

23. Dispositif de télévision numérique terrestre portable selon l'une quelconque des revendications 1 à 20, **caractérisé en ce que** lesdites antennes sont isotropes.

24. Dispositif de télévision numérique terrestre portable selon la revendication 23, **caractérisé en ce que** lesdites antennes sont des antennes quart d'onde.

25. Dispositif de télévision numérique terrestre portable selon l'une quelconque des revendications 1 à 24, **caractérisé en ce que** lesdites antennes sont sortables de leur support pour les éloigner l'une de l'autre.

## Patentansprüche

1. Vorrichtung für mobiles digitales terrestrisches Fernsehen, umfassend ein Gerät für mobiles digitales terrestrisches Fernsehen sowie Einrichtungen für den Empfang eines digitalen terrestrischen Fernsehsignals niedriger Leistung, wobei das Gerät für mobiles digitales terrestrisches Fernsehen einen Bildschirm zur Anzeige des digitalen terrestrischen Fernsehen umfasst, wobei die Vorrichtung **dadurch gekennzeichnet ist, dass** die Empfangseinrichtungen (30, 31) zwei Antennen zum Empfang des digitalen Signals umfassen, wobei jene Antennen im Verhältnis zueinander derart gelagert sind, dass die beiden Antennen in einer Entfernung zueinander höher oder gleich einem Viertel der Wellenlänge des zum empfangenden Signals angeordnet sind, wobei die Empfangseinrichtungen (30, 31) außerdem zwei jeweils mit jenen Antennen verbundenen Tuners umfassen, wobei die Vorrichtung für mobiles digitales terrestrisches Fernsehen Mittel zur Verarbeitung der vielfältigen digitalen Signale umfasst, die für die Verarbeitung der digitalen Signale am Ausgang jener Tuners ausgebildet sind, wobei jene Antennen durch einen Träger (9, 10, 81) getragen werden, der Vorrichtungen enthält, um die Antennen an das Gerät für mobiles digitales terrestrisches Fernsehen anzuschließen, wobei jene durch den Träger (9, 10, 81) getragenen Antennen sich dazu eignen, vom Gerät für mobiles digitales terrestrisches Fernsehen entfernt angeordnet zu sein.

2. Vorrichtung für mobiles digitales terrestrisches Fernsehen nach Anspruch 1, **dadurch gekennzeichnet, dass** die Antennen durch mindestens eine Kabelverbindung mit dem Gerät für mobiles digitales terrestrisches Fernsehen verbunden sind.

3. Vorrichtung für mobiles digitales terrestrisches Fernsehen nach Anspruch 2, **dadurch gekennzeichnet, dass** der Träger (9, 10, 81) Vorrichtungen zum Verstauen der Kabelverbindung enthält.

4. Vorrichtung für mobiles digitales terrestrisches Fernsehen nach einem der vorhergehenden Ansprüche 1-3, **dadurch gekennzeichnet, dass** der Träger (9, 10, 81) Vorrichtungen (82) zur Verstärkung der durch die Antennen empfangenen Signale umfasst.

5. Vorrichtung für mobiles digitales terrestrisches Fernsehen nach einem der vorhergehenden Ansprüche 1-4, **dadurch gekennzeichnet, dass** die beiden Tuners abnehmbar sind, und dadurch dass der Träger (9, 10, 81) Mittel zur vorübergehenden Befestigung der abnehmbaren Tuners umfasst.

6. Vorrichtung für mobiles digitales terrestrisches Fernsehen nach dem Anspruch 5, **dadurch gekennzeichnet, dass** der Träger Befestigungsmittel umfasst, die von den zur Verarbeitung der empfangenen digitalen Signale ausgebildeten Verarbeitungsvorrichtungen der vielfältigen digitalen Signale lösbar sind.

7. Vorrichtung für mobiles digitales terrestrisches Fernsehen nach einem der vorhergehenden Ansprüche 1-6, **dadurch gekennzeichnet, dass** die Antennen Befestigungsmittel umfassen, die sich dazu eignen, an einer im Wesentlichen senkrechten Wand befestigt zu sein.

8. Vorrichtung für mobiles digitales terrestrisches Fernsehen nach Anspruch 7, **dadurch gekennzeichnet, dass** die Befestigungsmittel Saugköpfe oder Klebstoff sind.

9. Vorrichtung für mobiles digitales terrestrisches Fernsehen nach einem der vorhergehenden Ansprüche, **dadurch gekennzeichnet, dass** der Träger (9, 10, 81) als Schutzkappe für jenen Anzeigebildschirm ausgebildet ist.

10. Vorrichtung für mobiles digitales terrestrisches Fernsehen nach Anspruch 9, **dadurch gekennzeichnet, dass** die Schutzkappe anhand von Gelenkscharnieren am Gerät für mobiles digitales terrestrisches Fernsehen befestigt ist.

11. Vorrichtung für mobiles digitales terrestrisches Fernsehen nach Anspruch 10, **dadurch gekennzeichnet, dass** die Schutzkappe in geschlossener Position über dem Anzeigebildschirm jenes Geräts für mobiles digitales terrestrisches Fernsehen gelagert ist.

12. Vorrichtung für mobiles digitales terrestrisches Fernsehen nach Anspruch 10 oder 11, **dadurch gekennzeichnet, dass** die Schutzkappe sich in entfalteter Position als Stütze für jenes Gerät für mobiles digitales terrestrisches Fernsehen eignet.

13. Vorrichtung für mobiles digitales terrestrisches Fernsehen nach einem der Ansprüche 10-12, **dadurch gekennzeichnet, dass** die Schutzkappe einen Winkel zwischen 260° - 280 ° mit jenem Anzeigebildschirm des Geräts für mobiles digitales terrestrisches Fernsehen bildet, wenn die Klappe in entfalteter Position gelagert ist.

14. Vorrichtung für mobiles digitales terrestrisches Fernsehen nach Anspruch 10 oder 13, **dadurch gekennzeichnet, dass** die Schutzkappe sich dazu eignet, von jenem Gerät für mobiles digitales terrestrisches Fernsehen abgenommen zu werden.

15. Vorrichtung für mobiles digitales terrestrisches Fernsehen nach einem der vorhergehenden Ansprüche 1-8, **dadurch gekennzeichnet, dass** eine Transporttasche zu jener Vorrichtung für mobiles digitales terrestrisches Fernsehen dazugehört, wobei eine Klappe der Transporttasche jenen Träger bildet und die Antennen aufnimmt, und wobei die Klappe zwischen einer geschlossenen Position und einer im Verhältnis zum Gerät für mobiles digitales terrestrisches Fernsehen entfalteten Position beweglich angeordnet ist.

16. Vorrichtung für mobiles digitales terrestrisches Fernsehen nach Anspruch 15, **dadurch gekennzeichnet, dass** sich die Klappe als Stütze für jenes Gerät für mobiles digitales terrestrisches Fernsehen eignet, wenn die Klappe in entfalteter Position gelagert ist.

17. Vorrichtung für mobiles digitales terrestrisches Fernsehen nach einem der vorhergehenden Ansprüche 1-8, **dadurch gekennzeichnet, dass** der Antennenträger aus einer Antennentasche besteht.

18. Vorrichtung für mobiles digitales terrestrisches Fernsehen nach Anspruch 17, **dadurch gekennzeichnet, dass** der Antennenträger zwei im Verhältnis zu einander beweglichen Teile enthält, wobei jeder Teil eine Antenne enthält, wobei der Antennenträger dazu geeignet ist, teilweise oder vollständig geöffnet zur Gelenkachse gelagert zu werden, um die Antennen von einander in Abstand zu bringen.

19. Vorrichtung für mobiles digitales terrestrisches Fernsehen nach Anspruch 17 oder Anspruch 18, **dadurch gekennzeichnet, dass** die Antennentasche an drei Seiten geöffnet werden kann.

20. Vorrichtung für mobiles digitales terrestrisches Fernsehen nach einem der vorhergehenden Ansprüche, **dadurch gekennzeichnet, dass** die Vorrichtung für mobiles digitales terrestrisches Fernsehen Speichermittel und Aufzeichnungsmittel zur Speicherung des digitalen Signals in den Speichermitteln umfasst.

21. Vorrichtung für mobiles digitales terrestrisches Fernsehen nach einem der vorhergehenden Ansprüche, **dadurch gekennzeichnet, dass** jene Antennen eine räumlich anisotrope Empfindlichkeit besitzen.

22. Vorrichtung für mobiles digitales terrestrisches Fernsehen nach Anspruch 21, **dadurch gekennzeichnet, dass** jede Antenne zwei Stränge ungleicher Höhe enthält.

23. Vorrichtung für mobiles digitales terrestrisches Fernsehen nach einem der vorhergehenden Ansprüche 1-20, **dadurch gekennzeichnet, dass** jene Antennen isotrop sind.

24. Vorrichtung für mobiles digitales terrestrisches Fernsehen nach Anspruch 23, **dadurch gekennzeichnet, dass** jene Antennen Viertelwellenantennen sind.

25. Vorrichtung für mobiles digitales terrestrisches Fernsehen nach einem der vorhergehenden Ansprüche 1-24, **dadurch gekennzeichnet, dass** die Antennen aus ihrem Träger herausnehmbar sind, um entfernt von einander angeordnet zu werden.

## Claims

1. Portable digital terrestrial television device comprising a portable digital terrestrial television apparatus and means for receiving a digital terrestrial television signal of low power, the portable digital terrestrial television apparatus comprising a viewing screen for the digital terrestrial television, the device being **characterised in that** the reception means (30, 31) comprise two antennae for receiving the digital signal, the relative disposition of said antennae being such that the two antennae are disposed at a distance from one other greater than or equal to a quarter of the wavelength of the signal to be received, the reception means further comprising two tuners respectively associated with said antennae, the portable digital terrestrial television device comprising means for processing the diversity of the digital signals and adapted to process the digital signals output from said tuners, said antennae being borne by a support (9, 10, 81) comprising means for connecting the antennae to the portable digital terrestrial television apparatus, said antennae borne by the support (9, 10, 81) being capable of being moved away from the portable digital terrestrial television apparatus.

2. Portable digital terrestrial television device according to claim 1, **characterised in that** the antennae are connected to the portable digital terrestrial television apparatus by at least one wire connection.

3. Portable digital terrestrial television device according to claim 2, **characterised in that** the support (9, 10, 81) comprises means for storing the wire connection

4. Portable digital terrestrial television device according to any one of claims 1 to 3, **characterised in that** the support (9, 10, 81) comprises means (82) for amplifying the signals picked up by the antennae.

5. Portable digital terrestrial television device according to any one of claims 1 to 4, **characterised in that** the two tuners are detachable, and **in that** the support (9, 10, 81) comprises temporary fixing means for said detachable tuners.

6. Portable digital terrestrial television device according to claim 5, **characterised in that** the support comprises fixing means detachable from the means for processing the diversity of the digital signals adapted to process the digital signals received.

7. Portable digital terrestrial television device according to any one of claims 1 to 6, **characterised in that** the antennae comprise fixing means capable of being fixed to a substantially vertical wall.

8. Portable digital terrestrial television device according to claim 7, **characterised in that** the fixing means are suckers or adhesive.

9. Portable digital terrestrial television device according to any one of the preceding claims, **characterised in that** the support (9, 10, 81) is a protecting flap for said viewing screen.

10. Portable digital terrestrial television device according to claim 9, **characterised in that** the protecting flap is fixed to the portable digital terrestrial television apparatus by articulating hinges.

11. Portable digital terrestrial television device according to claim 10, **characterised in that** the protecting flap, in the closed position, is above the viewing screen of said portable digital terrestrial television apparatus.

12. Portable digital terrestrial television device according to claim 10 or 11, **characterised in that** the protecting flap, in the deployed position, is capable of serving as a prop for said portable digital terrestrial television apparatus.

13. Portable digital terrestrial television device according to any one of claims 10 to 12, **characterised in that** when the protecting flap is in the deployed position, the protecting flap forms an angle between 260° and 280° with said viewing screen of the portable digital terrestrial television apparatus.

14. Portable digital terrestrial television device according to any one of claims 10 to 13, **characterised in that** the protecting flap is adapted to be detached from said portable digital terrestrial television apparatus.

15. Portable digital terrestrial television device according to any one of claims 1 to 8, **characterised in that** a carrying case is associated with said portable digital terrestrial television device, a flap of the carrying case forming said support and incorporating the antennae, and the flap being moveable between a closed position and a deployed position with respect to the portable digital terrestrial television apparatus.

16. Portable digital terrestrial television device according to claim 15, **characterised in that** when the protecting flap is in the deployed position, the flap is adapted to serve as a prop for said portable digital terrestrial television apparatus.

17. Portable digital terrestrial television device according to any one of claims 1 to 8, **characterised in that** the antennae support is constituted by an antennae case.

18. Portable digital terrestrial television device according to claim 17, **characterised in that** the antennae support comprises two parts hinged with respect to one other, each part comprising an antenna, the antennae support being capable of being positioned partially or fully open with respect to the hinge axis so as to place the antennae away from each other.

19. Portable digital terrestrial television device according to claim 17 or to claim 18, **characterised in that** the antennae case can be opened on three sides.

20. Portable digital terrestrial television device according to any one of the preceding claims, **characterised in that** the portable digital terrestrial television device comprises storage means and recording means adapted to record the digital signal in the storage means.

21. Portable digital terrestrial television device according to any one of the preceding claims, **characterised in that** said antennae have spatially anisotropic sensitivity.

22. Portable digital terrestrial television device according to claim 21, **characterised in that** each antenna comprises two elements of unequal height.

23. Portable digital terrestrial television device according to any one of claims 1 to 20, **characterised in that** said antennae are isotropic.

24. Portable digital terrestrial television device according to claim 23, **characterised in that** said antennae are quarter wave antennae.

25. Portable digital terrestrial television device according to any one of claims 1 to 24, **characterised in that** said antennae can be removed from their support so as to move them away from one another.
